# FASCICULE DE BREVET EUROPEEN

(11) **EP 4 686 855 B1**
(45) Date de publication et mention de la délivrance du brevet: **25.11.2026**
(21) Numéro de dépôt: 25190232.6
(22) Date de dépôt: 17.07.2025
(51) Int. Cl.: F16F 15/123

(54) **DISPOSITIF D AMORTISSEMENT VIBRATOIRE**
SCHWINGUNGSDÄMPFENDE VORRICHTUNG
VIBRATION DAMPING DEVICE

(30) Priorité: 31.07.2024 FR 2408492
(43) Date de publication de la demande: 04.02.2026
(73) Titulaire: VALEO EMBRAYAGES, 80009 Amiens (FR)
(72) Inventeur: BOUDIN, Jerome, 95892 Cergy Pontoise (FR); FARINEAUX, Paul, 95892 Cergy Pontoise (FR); ERREHYMY, Mouhsine, 95892 Cergy Pontoise (FR)
(74) Mandataire: Valeo Powertrain Systems

(56) Documents cités:
- WO-A1-2017/051594
- DE-A1- 102019 121 248
- DE-A1- 102020 116 574
- FR-B1- 3 099 531
- US-A- 4 904 226

## Description

La présente invention se rapporte à un dispositif d'amortissement vibratoire pour véhicule automobile. Le véhicule automobile peut être un véhicule dit industriel, ce dernier étant par exemple un poids lourd, un véhicule de transport en commun, ou un véhicule agricole.

Plus précisément, l'invention concerne un perfectionnement au dispositif d'amortissement vibratoire pour véhicule automobile tel qu'un disque d'embrayage à friction ou encore un double volant amortisseur. Le dispositif d'amortissement vibratoire est disposé généralement entre le moteur à explosion et la boite de vitesses afin de filtrer les acyclismes issus de l'arbre menant de sorte que le ou les arbres menés soient exempts de ces acyclismes ou encore faiblement affectés par ces acyclismes. Dans le cadre d'une boite manuelle ou d'une boite robotisée, un mécanisme d'embrayage fixé sur le volant moteur, autrement appelé volant d'inertie, applique un effort de serrage sur le disque d'embrayage à friction de manière à transmettre le couple produit par le moteur.

Le disque d'embrayage à friction comprend, de façon traditionnelle, des garnitures de frottement annulaires, fixées sur un support, lui-même rapporté sur un voile de transmission de couple. Deux éléments de guidage disposés de part et d'autre du voile sont montées sur un moyeu central solidaire en rotation de l'arbre mené de la boîte de vitesses. Des ressorts hélicoïdaux de compression sont disposés circonférentiellement entre les éléments de guidage et le voile, la transmission du couple et la filtration des acyclismes moteur se faisant par compression et relâchement successifs des ressorts. Afin d'améliorer la cinématique des ressorts hélicoïdaux de compression au sein du disque d'embrayage à friction, il est connu de rajouter des sièges métalliques entre les ressorts et les parties coaxiales formées par les éléments de guidage et le voile.

Dans le document EP3604853 A1, il est décrit un disque d'embrayage à friction comportant des sièges métalliques intervenant entre, d'une part, l'une au moins des extrémités de ressort et, d'autre part, l'une et/ou l'autre des parties coaxiales.

Chaque siège supporte un sous-ensemble de trois ressorts concentriques. Les ressorts et les sièges sont reçus dans des logements formés dans les parties coaxiales. Pour cela, chaque siège métallique comprend une partie frontale assurant l'appui et/ou le centrage de l'extrémité des ressorts avec lesquels il coopère, et une partie dorsale adossée à la partie frontale présentant un tronçon de barreau s'étendant en saillie réalisant une liaison pivot avec l'une et/ou l'autre des parties coaxiales. Les éléments de guidage et le voile comprennent des évidements ayant des formes complémentaires au tronçon de barreau du siège. L'axe du tronçon de barreau, qui est aussi l'axe de la liaison pivot, est situé sensiblement dans le plan de la partie dorsale du siège.

Or, en fonctionnement, du fait des forces centrifuges qui s'appliquent sur les trois ressorts concentriques et les sièges, une éjection des sièges en dehors des évidements peut survenir. Cette éjection des sièges se traduit par une sortie radialement vers l'extérieur du tronçon de barreau de son logement dans les parties coaxiales, la fonction de liaison pivot n'étant alors plus assurée. Cette éjection provoque une usure des contacts entre chaque siège et l'une et/ou l'autre des parties coaxiales. De plus, cette éjection des sièges entraine un frottement plus important des ressorts sur une partie radialement externe des logements des parties coaxiales les recevant. Dans le document EP3604853 A1, l'éjection du siège est accentuée par le fait de la masse conjuguée des trois ressorts concentriques. La masse du siège participe également au phénomène d'éjection.

Par ailleurs, le document WO2017/051594 décrit un dispositif d'amortissement vibratoire selon le préambule de la revendication 1.

Un but de l'invention est de fournir des sièges ne pouvant pas être éjectés lors du fonctionnement du dispositif d'amortissement vibratoire les comprenant.

L'invention vise à remédier à ces problèmes techniques en proposant un dispositif d'amortissement vibratoire perfectionné utilisant un siège présentant une nouvelle cinématique de pivotement avec les éléments de guidage et le voile de transmission de couple.

A cet effet, la présente invention propose un dispositif d'amortissement vibratoire pour véhicule automobile, comprenant :
- un voile de transmission de couple ;
- deux éléments de guidage liés en rotation, coaxiaux suivant un axe de rotation et disposés de part et d'autre dudit voile de transmission de couple ;
- des ressorts hélicoïdaux de compression en appui sur le voile de transmission de couple et les éléments de guidage par l'intermédiaire de sièges disposés sur les extrémités des ressorts, dans lequel chaque siège comprend :
- une face frontale apte à coopérer avec l'extrémité des ressorts comprenant un rebord de centrage dont l'axe de centrage est confondu avec l'axe des ressorts,
- une face dorsale définissant un plan géométrique P adossé à la partie frontale, et
- un enfoncement s'étendant en creux depuis la face dorsale,
   le dispositif d'amortissement vibratoire étant remarquable en ce que chaque siège est en appui sur des protubérances formées respectivement sur le voile de transmission de couple et les deux éléments de guidage de manière à coopérer selon une liaison pivot, et
   les protubérances pénètrent dans l'enfoncement qui est commun au voile de transmission de couple et aux deux éléments de guidage.

Ce dispositif d'amortissement vibratoire, selon l'invention, présente l'avantage de limiter fortement le risque d'éjection des sièges dans les phases où le couple à transmettre est faible ou lors de vitesse de rotation importante en raison de la présence de l'enfoncement. L'enfoncement est de grande dimension pour accueillir les protubérances du voile de transmission de couple et des deux éléments de guidage. Cet enfoncement diminue fortement la masse du siège par rapport à un siège connu de l'art antérieur, ce qui limite le risque d'éjection de celuici en dehors de la liaison pivot.

Aussi, l'axe du mouvement de pivotement du siège est éloigné de la face dorsale et, par conséquent, de la face frontale du siège. Ceci empêche la désolidarisation de la liaison pivot entre le voile de transmission de couple et le siège et donc évite l'éjection complète du siège en phase de fonctionnement sur véhicule.

Etant donné que l'on rajoute de la matière sur le voile de transmission de couple par l'intermédiaire des protubérances, la tenue mécanique du voile de transmission de couple n'est pas affectée par la présence des sièges. Le dispositif d'amortissement vibratoire pourra transmettre plus de couple.

Par exemple, l'enfoncement peut être réalisé sous la forme d'une cavité centrale. L'enfoncement peut également être réalisé sous la forme d'une rainure ayant une forme allongée qui débouche sur les bords du siège.

De préférence, l'enfoncement est de forme concave et comprend un fond arrondi défini par un rayon de pivotement, la protubérance du voile de transmission de couple et/ou les protubérances des deux éléments de guidage viennent en appui sur le rayon de pivotement du fond arrondi. De cette manière, la surface du siège en contact avec le voile de transmission de couple est augmentée. La pression de contact diminue, ce qui contribuent à réduire l'usure au niveau de l'interface du siège avec le voile de transmission de couple.

Avantageusement, l'enfoncement comprend deux surfaces d'appui agencées pour venir en appui sur la protubérance du voile de transmission de couple et des deux éléments de guidage lors de la compression des ressorts, chaque surface d'appui est tangente au rayon de pivotement du fond arrondi.

Selon une variante de l'invention, l'enfoncement présente, en section dans le plan médian P' passant par l'axe des ressorts, une forme prismatique comportant les deux surfaces d'appui sensiblement planes s'éloignant l'un de l'autre en direction de la face dorsale, la forme prismatique ayant un angle α compris entre 30° et 70°.

Selon une autre variante de l'invention, les surfaces d'appui sont courbes, par exemple avec une développante de cercle ou polynomiale.

Selon un aspect de l'invention, le voile de transmission de couple et les deux éléments de guidage comprennent chacun au moins une fenêtre pour le logement des ressorts et de deux sièges, chaque fenêtre comprend deux protubérances disposées en regard l'une de l'autre. Par exemple, le voile de transmission de couple peut comprendre entre trois et six fenêtres régulièrement réparties autour de l'axe de rotation.

De préférence, chaque fenêtre comprend un bandeau radialement externe, deux surfaces radiales de support supportant les protubérances de forme convexe et un bord radialement interne de sorte à former un logement fermé apte à recevoir les ressorts et les sièges.

Selon un aspect de l'invention, chaque protubérance comporte une surface d'extrémité arrondie et deux cotés sensiblement plans, les cotés sensiblement plans sont les cotés d'une forme prismatique ayant un angle aigu β compris entre 20° et 60°, qui s'éloignent l'un de l'autre en direction de la surface radiale de support.

De préférence, l'angle α de l'enfoncement est supérieur à l'angle aigu β de la protubérance. Le siège peut ainsi pivoter librement autour de la protubérance du voile de transmission de couple. L'écart d'angle entre l'enfoncement et la protubérance est de l'ordre de 10°.

Selon un aspect de l'invention, l'enfoncement est une cavité centrale qui comprend deux rebords latéraux venant respectivement en appui sur les flancs externes des deux éléments de guidage.

De préférence, la cavité centrale pénètre au-delà de la face frontale du siège dans la direction de l'axe des ressorts. On profite ainsi de la matière disponible au niveau du rebord de centrage. De cette manière, l'axe de pivotement du siège est éloigné de la face dorsale du siège. Le guidage du siège sur les protubérances du voile de transmission de couple et des deux éléments de guidage est ainsi amélioré. Ceci empêche la désolidarisation de la liaison pivot entre le voile de transmission de couple et le siège et donc évite l'éjection complète du siège en phase de fonctionnement sur véhicule.

Selon un autre aspect de l'invention, l'enfoncement est une rainure ayant une forme allongée qui débouche sur les bords du siège et le fond arrondi de l'enfoncement comprend des barrettes d'espacement s'étendant en direction du voile de transmission de couple depuis le fond arrondi et qui s'intercalent entre le voile de transmission de couple et les deux éléments de guidage.

L'invention peut présenter l'une ou l'autre des caractéristiques décrites ci-dessous combinées entre elles ou prises indépendamment les unes des autres :
- la cavité centrale est composée en outre d'un fond arrondi, de deux surfaces d'appui et de deux rebords latéraux.
- le siège comporte au moins un gradin s'étendant en saillie depuis la face frontale, apte à coopérer avec l'extrémité des ressorts, le gradin comprenant le rebord de centrage.
- le fond arrondi est commun aux protubérances du voile de transmission de couple et des deux éléments de guidage.
- les protubérances du voile de transmission de couple et les protubérances des deux éléments de guidage sont de géométries identiques.
- la protubérance est de forme convexe.
- l'espace disponible selon la direction de l'axe de rotation entre la protubérance du voile de transmission de couple et l'une des protubérances des deux éléments de guidage est plus petit que l'épaisseur du voile de transmission de couple.
- le fond arrondi de l'enfoncement comprend des barrettes d'espacement qui s'intercalent entre le voile de transmission de couple et les deux éléments de guidage.
- la surface d'extrémité arrondie de la protubérance présente un rayon complémentaire au rayon de pivotement du fond arrondi.
- le centre du rayon complémentaire de la surface d'extrémité arrondie est décalé circonférentiellement par rapport à la surface d'appui latéral de la fenêtre.
- la surface d'appui latéral présente un premier bord et un deuxième bord aptes à venir en contact de butée avec la face dorsale du siège lors d'une mise en œuvre de la liaison pivot, les deux bords n'étant pas parallèles l'un par rapport à l'autre.
- la cavité centrale du siège est de forme concave et s'étend selon l'axe Y depuis la face dorsale.
- le dispositif d'amortissement vibratoire comprend une première masse d'inertie, la première masse d'inertie étant rapportée ou fixée sur l'un des éléments de guidage.
- le dispositif d'amortissement vibratoire comprend une deuxième masse d'inertie, la deuxième masse d'inertie étant rapportée, directement ou indirectement, sur le voile de transmission de couple.
- le dispositif d'amortissement vibratoire comprend une série de sous-ensembles de ressorts hélicoïdaux de compression concentriques supportés par deux sièges, les sous-ensembles sont régulièrement répartis autour de l'axe de rotation.
- un sous ensemble comprend par exemple deux ressorts hélicoïdaux de compression concentriques ou par exemple trois ressorts hélicoïdaux de compression concentriques.

Avantageusement mais facultativement, le siège peut présenter au moins l'une des caractéristiques suivantes:
- le siège de ressort peut être obtenu par moulage d'un métal ou d'une matière synthétique selon la technologie des poudres compressées.
- le siège de ressort peut être obtenu par mise en forme d'un métal ou d'une matière synthétique selon la technologie de fabrication par addition de matière.

L'invention a également pour objet, selon un autre de ses aspects, un disque d'embrayage à friction comprenant un disque de friction équipé de garnitures de frottement et un dispositif d'amortissement vibratoire reprenant tout ou partie des caractéristiques mentionnées précédemment, dans lequel le disque de friction est rapporté sur l'un des éléments de guidage ou sur le voile de transmission de couple.

L'invention a également pour objet, selon un autre de ses aspects, un double volant amortisseur comprenant une première masse d'inertie et une deuxième masse d'inertie coaxiales selon un axe de rotation X, un dispositif d'amortissement vibratoire reprenant tout ou partie des caractéristiques mentionnées précédemment, dans lequel la première masse d'inertie est portée par les éléments de guidage et la deuxième masse d'inertie est portée par le voile de transmission de couple.

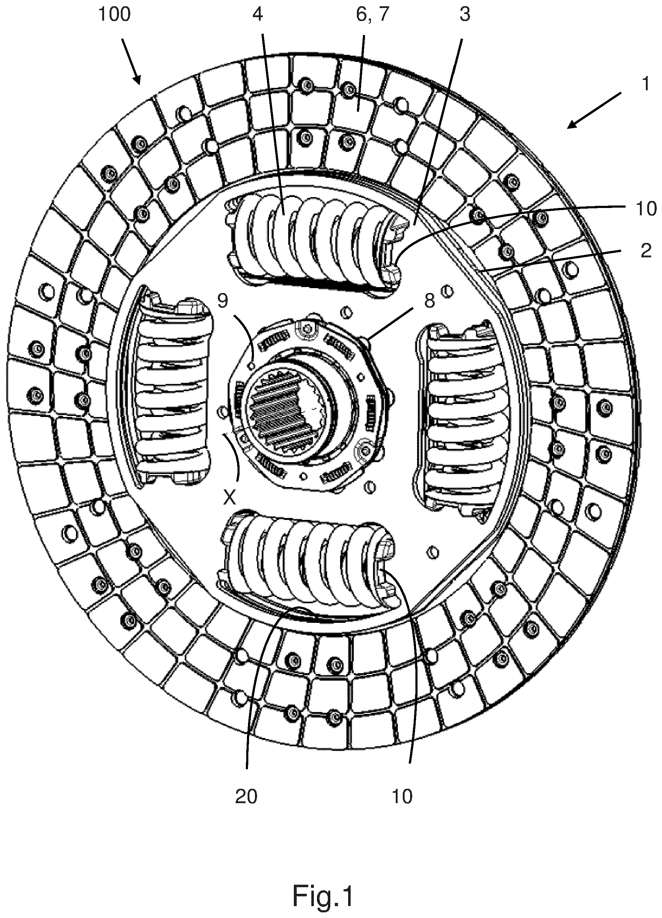

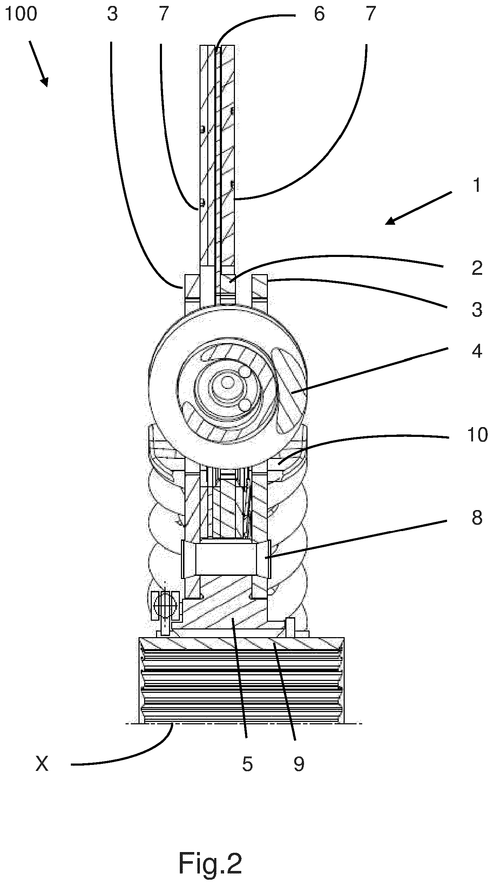

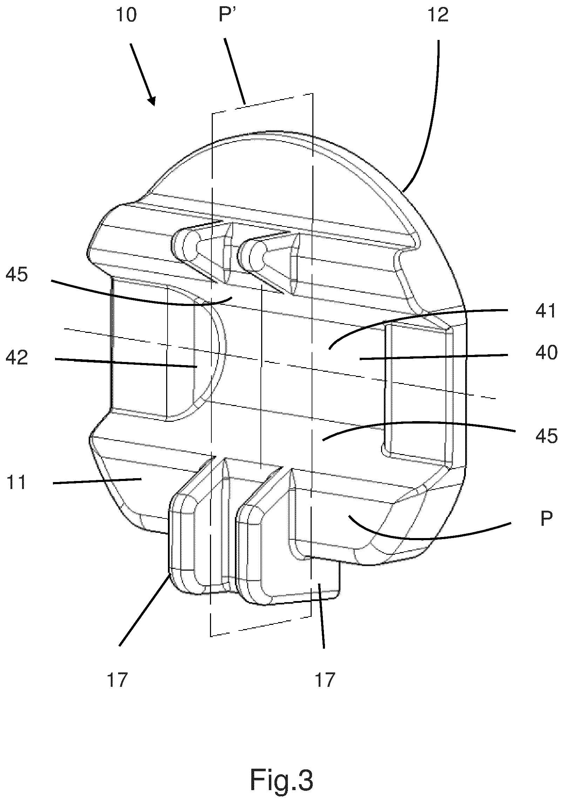

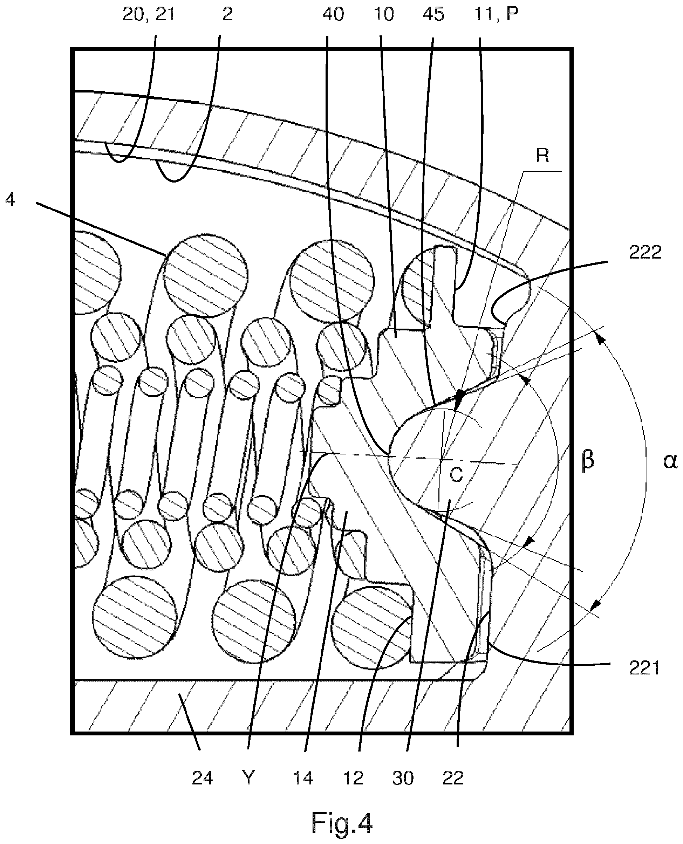

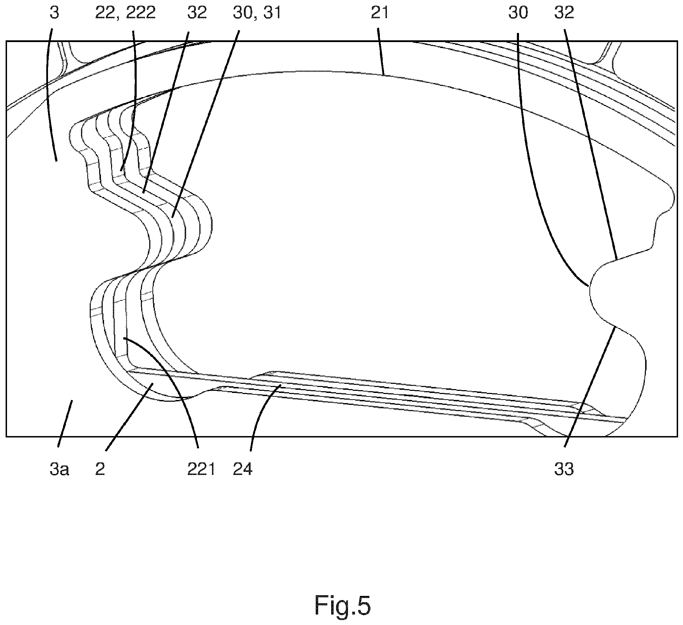

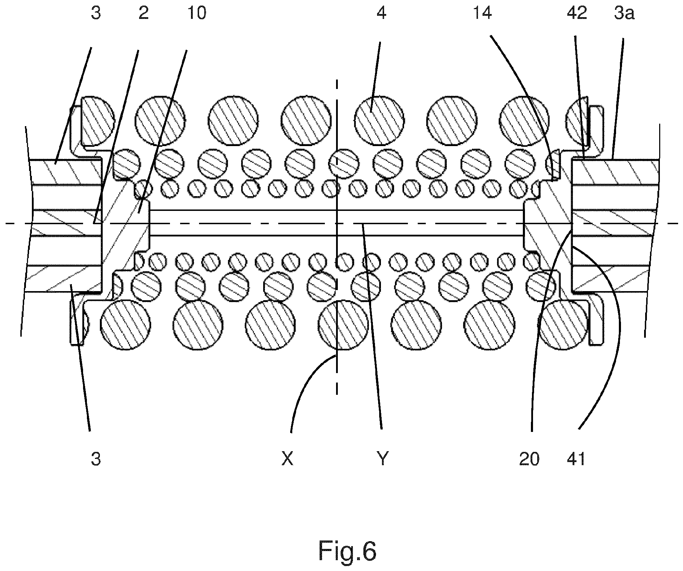

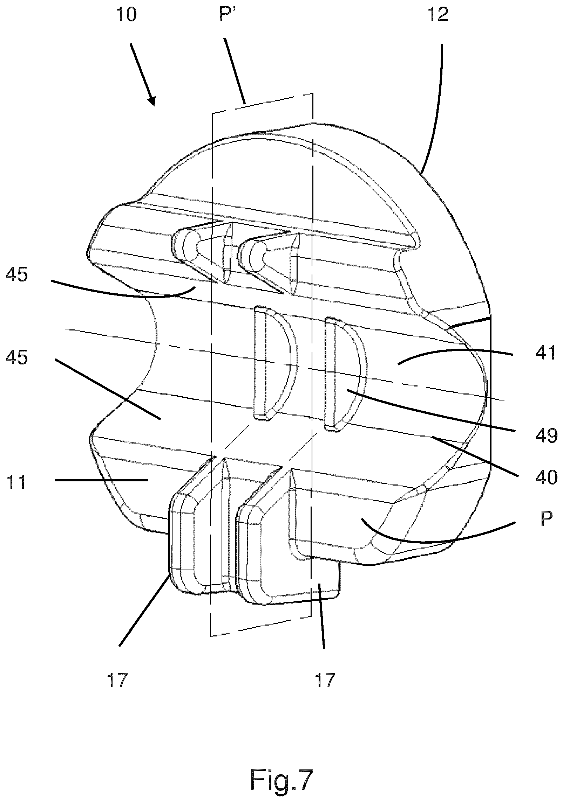

L'invention sera mieux comprise à la lecture de la description qui va suivre, donnée uniquement à titre d'exemple et faite en se référant aux dessins annexés dans lesquels :
- la figure [Fig. 1] est une vue isométrique d'un disque d'embrayage à friction intégrant un dispositif d'amortissement vibratoire selon un premier mode de mise en œuvre de l'invention :
- la figure [Fig. 2] est une vue en coupe du disque d'embrayage à friction selon le premier mode de mise en œuvre de l'invention de la figure 1 ;
- la figure [Fig. 3] est une isométrique d'un siège de friction selon le premier mode de mise en œuvre de l'invention de la figure 1 ;
- la figure [Fig. 4] est une vue en coupe du dispositif d'amortissement vibratoire dans une position de repos selon le premier mode de mise en œuvre de l'invention de l'invention de la figure 1 ;
- la figure [Fig. 5] est une vue partielle du dispositif d'amortissement vibratoire dans une position de repos selon le premier mode de mise en œuvre de l'invention de l'invention de la figure 1 ;
- la figure [Fig. 6] est une autre vue en coupe du dispositif d'amortissement vibratoire dans une position de repos selon le premier mode de mise en œuvre de l'invention de l'invention de la figure 1 ;
- la figure [Fig. 7] est une isométrique d'un siège de friction selon un deuxième mode de mise en œuvre de l'invention.

Dans la suite de la description et des revendications, on utilisera à titre non limitatif et afin d'en faciliter la compréhension, les termes « avant » ou « arrière » selon la direction par rapport à une orientation axiale déterminée par l'axe de rotation X de la transmission du véhicule automobile et les termes « intérieur / interne » ou « extérieur / externe » par rapport à l'axe de rotation X et suivant une orientation radiale, orthogonale à ladite orientation axiale.

Les figures 1 à 6 illustrent un disque d'embrayage à friction 100 intégrant le dispositif d'amortissement vibratoire 1 selon un premier mode de mise en œuvre de l'invention.

Le disque d'embrayage à friction 100 d'axe de rotation X comprend un dispositif d'amortissement vibratoire 1 dans lequel on retrouve de manière traditionnelle un voile de transmission de couple 2, des éléments de guidage 3 et des ressorts hélicoïdaux de compression 4. Le disque d'embrayage à friction illustre dans le cas présent une architecture dites « symétrique » et comprend un disque de friction 6 rapporté sur le voile de transmission de couple 2. Le disque de friction 6 est équipé de garnitures de frottement 7 réparties sur la périphérie du voile de transmission de couple 2 selon l'axe de rotation X et aptes à frotter sur un plateau de pression d'un mécanisme d'embrayage. Les deux éléments de guidage 3, autrement appelés rondelles de guidage 3, sont disposées de part et d'autre du voile de transmission de couple 2 en emprisonnant dans des logements intercalaires les ressorts hélicoïdaux de compression 4.

Un mécanisme d'embrayage fixé sur le volant moteur (non représenté) applique un effort de serrage sur le disque d'embrayage à friction 1 de manière à transmettre le couple produit par le moteur en direction de la boîte de vitesses.

Le couple moteur entre dans le disque d'embrayage à friction par l'intermédiaire du disque de friction 6 et ressort par l'intermédiaire d'un moyen central 5 disposé entre les deux rondelles de guidage 3. Le moyeu central 5 est raccordé aux rondelles de guidage 3 par des rivets 8. Le moyeu central 5 est en prise avec un pré-amortisseur, notamment par l'intermédiaire d'un corps de moyeu 9. Le corps de moyeu 9 est monté sur l'arbre mené de la boîte de vitesse (non représenté) et transmet le couple moteur par des cannelures formées sur son alésage intérieur.

Les parties coaxiales 2 et 3 sont montées rotatives l'une par rapport à l'autre à l'encontre de moyens amortisseurs comportant, ici, des ressorts hélicoïdaux de compression 4 ainsi que des moyens d'interfaçage 10 avec les deux parties coaxiales 2 et 3. Plus précisément, les moyens d'interfaçage comprennent des sièges 10 de ressort placés aux extrémités des ressorts 4, d'une part, et, d'autre part, des protubérances 30 formées dans les éléments de guidage 3 et dans le voile de transmission de couple 2. Les sièges 10 sont aptes à coopérer avec les protubérances 30 formées dans les éléments de guidage 3 et/ou le voile de transmission de couple 2 selon une liaison pivot.

Le voile de transmission de couple 2, réalisé en tôle d'acier découpée et/ou emboutie à la presse, comprend deux flancs parallèles et une tranche correspondant à l'épaisseur de la tôle. De même, chaque élément de guidage 3, réalisé en tôle d'acier découpée et/ou emboutie à la presse, comprend deux flancs parallèles et une tranche correspondant à l'épaisseur de la tôle.

Lors des phases de transmission de couple, les ressorts hélicoïdaux de compression 4 se compriment sous l'effet de la rotation du voile de transmission de couple 2 par rapport aux éléments de guidage 3 selon l'axe de rotation X. La transmission du couple et la filtration des acyclismes moteur se fait par compression et relâchement successifs des ressorts 4. Des moyens de frottement comprenant au moins une rondelle élastique et une rondelle de frottement peuvent être disposés entre le voile de transmission de couple 2 et l'une ou l'autre des éléments de guidage 3 pour limiter l'amplitude des acyclismes.

Nous allons maintenant décrire plus en détail l'agencement des moyens d'interfaçage précités, dont le siège 10 de ressort, selon un mode préféré de mise en œuvre de l'invention, en référence aux figures 3 à 6.

Le siège 10 comporte un disque circulaire, de faible épaisseur par rapport à son diamètre, comprenant deux faces: une face frontale 12 apte à coopérer avec une extrémité des ressorts hélicoïdaux de compression 4, et une face dorsale 11 adossée à la face frontale 12 de l'autre côté du disque circulaire.

Pour assurer un bon positionnement relatif de l'extrémité des ressorts 4 sur le siège 10, la face frontale 12 comporte un rebord de centrage 14 s'étendant en saillie depuis ladite face frontale 12. Le rebord de centrage 14 est ici circulaire selon un axe Y passant par l'axe des ressorts et assure un centrage des ressorts extérieurs et intérieurs.

La face dorsale 11 défini un plan géométrique P, appelé plan du siège 10, sensiblement perpendiculaire à un axe Y du disque circulaire. Le plan géométrique P servira de référence pour définir la géométrie de l'enfoncement.

Pour faciliter la compression des ressorts 4 lors des phases de transmission de couple au sein du disque d'embrayage à friction 100, chaque siège 10 comprend un enfoncement 40a s'étendant en creux depuis la face dorsale 11 et les protubérances 30 pénètrent dans l'enfoncement 40a qui est commune au voile de transmission de couple 2 et aux deux éléments de guidage 3. Les protubérances 30 sont de formes convexes et viennent en appui sur des enfoncements 40a de formes concaves pour former une liaison pivot.

Dans le premier mode de réalisation de l'invention, l'enfoncement 40a est réalisé sous la forme d'une cavité centrale 40a. La cavité centrale est composée en outre d'un fond arrondi, de deux surfaces d'appui et de deux rebords latéraux. La cavité centrale 40a ne débouche pas sur les bords du siège.

La cavité centrale 40a du siège 10 est de forme concave et comprend donc un fond arrondi 41 défini par un rayon de pivotement R, la protubérance 30 du voile de transmission de couple 2 et les protubérances 30 des deux éléments de guidage 3 viennent en appui sur le rayon de pivotement R du fond arrondi 41. Le rayon de pivotement R est décalé par rapport au plan géométrique P. Le décalage peut être compris entre 1 et 10 mm.

La cavité centrale 40a comprend également deux surfaces d'appui 45 agencées pour venir en appui sur les tranches du voile de transmission de couple et les deux éléments de guidage lors de la compression des ressorts, chaque surface d'appui 45 est tangente au rayon de pivotement R du fond arrondi 41. La cavité centrale 40a présente, en section dans le plan médian P' passant par l'axe des ressorts, une forme prismatique comportant les deux surfaces d'appui 45 sensiblement planes s'éloignant l'un de l'autre en direction de la face dorsale, la forme prismatique ayant un angle α compris entre 30° et 70°.

La cavité centrale 40a comprend enfin deux rebords latéraux 42 venant respectivement en appui sur les flancs externes 3a des deux éléments de guidage 3.

La cavité centrale 40a pénètre dans la matière du siège 10 à partir du plan géométrique P définissant la face dorsale 11 dans la direction de l'axe des ressorts Y. La cavité centrale 40a présente dans un plan P' passant par l'axe Y et perpendiculaire à l'axe X un fond arrondi 41 de forme sensiblement circulaire de centre C. Enfin le raccordement entre chacune des surfaces d'appui 45 et la face dorsale 11 est réalisé par un congé présentant un rayon.

Le siège de ressort 10 comprend également sur la farce dorsale 11 deux barrettes de maintien 17 disposées en saillie et réparties de part et d'autre du plan P'. Les barrettes de maintien 17 sont espacées axialement par une distance légèrement supérieure à celle du voile de transmission de couple 2 et s'étendent parallèlement à ce plan P' sur la hauteur du siège. Le voile de transmission de couple 2 est disposé entre les barrettes de maintien 17. De cette manière, le siège de ressort 10 est positionné axialement par rapport au voile de transmission de couple 2.

Comme cela est illustré à la figure 4 sous forme schématique à partir du plan P', la face dorsale 11 et la cavité centrale 40a sont aptes à être reçues dans une fenêtre 20 prévu à cet effet dans les éléments de guidages 3 et le voile de transmission de couple 2. La fenêtre 20 du voile de transmission de couple 2 a un contour fermé de même que les fenêtres 20 des éléments de guidage 3. Chacune des fenêtres 20 comprend un bandeau radialement externe 21, deux surfaces radiales de support 22 supportant les protubérances 30 de forme convexe et un bord radialement interne 24. Le bord radialement interne 24 est formé par la partie centrale du voile de transmission de couple 2.

Dans cet exemple, le voile de transmission de couple 2 comprend quatre fenêtres 20 régulièrement réparties autour de l'axe de rotation X. Chaque fenêtre 20 maintient en position un sous-ensemble de trois ressorts hélicoïdaux de compression 4 concentriques supportés par deux sièges 10.

De manière générale, la fenêtre 20 est sensiblement complémentaire avec la partie du siège décrite ci-dessus avec laquelle il est amené à coopérer. Pour cela, dans le plan P', la surface radiale de support 22 comporte une protubérance 30 de forme convexe. Cette protubérance 30 comporte une surface d'extrémité arrondie 31 de section sensiblement circulaire et deux cotés 32, 33 sensiblement plans. La protubérance 30 présente une forme prismatique sensiblement complémentaire de la forme prismatique de la cavité centrale 40a précédemment décrite et apte à être reçu dans ladite cavité centrale 40a. Ainsi, les cotés 32, 33 sensiblement plans sont les cotés d'une forme prismatique ayant un angle aigu β compris entre 20° et 60°, qui s'éloignent l'un de l'autre en direction de la surface radiale de support 22.

Comme illustré sur la figure 4, l'angle α de la cavité centrale 40a est supérieur à l'angle aigu β de la protubérance 30. L'écart d'angle entre la cavité centrale 40a et la protubérance 30 est de l'ordre de 10°.

De part et d'autre de la protubérance 30, la surface radiale de support 22 présente un premier bord intérieur 221 et un deuxième bord extérieur 222, tous deux étant sensiblement plans. Les deux bords 221 et 222 ne sont pas parallèles l'un par rapport à l'autre. Le premier bord intérieur 221 et le deuxième bord extérieur 222 jouent un rôle de butée vis-à-vis du siège 10 lors de la mise en œuvre de la liaison pivot selon l'invention, dont le fonctionnement va être décrit ci-après.

Comme illustré sur les figures 5 et 6, la fenêtre 20 présente une symétrie en miroir par rapport à un axe médian matérialisé par l'axe vertical passant par X.

Nous allons maintenant décrire le fonctionnement du mode de mise en œuvre préféré de l'invention en référence aux figures 3 à 6.

La figure 4 illustre l'état du dispositif d'amortissement vibratoire 1 selon l'invention au repos ou l'état de ce même dispositif sans débattement angulaire entre les éléments de guidage 3 et le voile de transmission de couple 2, ni force centrifuge s'exerçant sur les ressorts.

Le siège 10 est en appui sur la protubérance 30 du voile de transmission de couple 2. Dans cet exemple de mise en œuvre, la face dorsale 11 du siège 10 n'est pas en appui sur le premier bord intérieur 221. Les cotés 32, 33 sensiblement plans de la forme prismatique de la protubérance ne sont pas en contact non plus avec les surfaces d'appui 45 de la cavité centrale 40a.

Sous l'effet de la vitesse de rotation de l'arbre menant sur véhicule, le siège 10 aura tendance à pivoter naturellement vers l'extérieur de la fenêtre 20 sous l'effet de la centrifugation des trois ressorts hélicoïdaux de compression 4 concentriques. Le deuxième bord extérieur 222 joue un rôle de butée vis-à-vis du siège 10 lors de la mise en rotation sur véhicule. A partir d'une vitesse de rotation prédéterminée, par exemple 1800 tr/mn, le siège 10 pivote autour de la liaison pivot et vient en butée sur le deuxième bord extérieur 222. Egalement, la surface supérieure d'appui 45 de la cavité centrale 40a est en appui sur le coté supérieur 32 sensiblement plan de la forme prismatique de la protubérance 30. Le siège 10 est alors maintenu sur la surface radiale de support 22 et n'est pas éjecté.

Lors d'une phase de transmission de couple au sein de la transmission, le voile de transmission de couple 2 tourne par rapport aux éléments de guidage 3 selon un angle pouvant atteindre par exemple jusqu'à 15°. Dans cette configuration, un des sièges est désormais en appui sur le voile de transmission de couple 2 et l'autre siège 10 est en appui sur l'élément de guidage 3. Chaque siège 10 pivote dans la cavité centrale 40a autour de la protubérance 30 respective du voile de transmission de couple 2 ou de l'élément de guidage 3. Les sièges sont entraînés dans ce pivotement par la déformation des ressorts hélicoïdaux de compression 4 concentriques. Les sièges peuvent encore être soumis à l'effet de la force centrifuge. En deçà de 1800 tr/mn, les sièges 10 pivotent autour de la liaison pivot de sorte que les faces frontales 12 des deux sièges 10 restent parallèles.

Dans le cas extrême d'un passage du couple maximal au sein de la transmission, les ressorts 4 concentriques viennent dans un état de compression maximal. Le débattement angulaire entre les éléments de guidage 3 et le voile de transmission de couple 2 est alors maximal. Le pivotement du siège 10 sur la protubérance 30 de l'élément de guidage 3 et sur la protubérance 30 du voile de transmission de couple 2 se poursuit. Lorsque les ressorts hélicoïdaux de compression 4 sont dans un état de compression maximal, les faces frontales 12 des sièges sont sensiblement parallèles. Les sièges 10 ne sont pas éjectés.

Dans une variante de réalisation de l'invention non représentée, le plan géométrique P de la face dorsale 11 est apte à venir en appui sur le premier bord intérieur 221 lorsque le dispositif d'amortissement vibratoire 1 est au repos, c'est-à-dire sans débattement angulaire entre les deux éléments de guidage 3 et le voile de transmission de couple 2, ni force centrifuge s'exerçant sur les ressorts.

On va maintenant décrire sur la figure 7, un deuxième mode de mise en œuvre de l'invention qui diffère du premier mode par le fait que l'enfoncement 40 débouche sur les bords du siège 10.

Dans ce deuxième mode de mise en œuvre, l'enfoncement 40 est réalisé sous la forme d'une rainure ayant une forme allongée qui débouche sur les bords du siège 10. Ce deuxième mode de mise en œuvre favorise l'assemblage des ressorts au sein du dispositif d'amortissement vibratoire.

Comme illustré sur la figure 7, le fond arrondi 41 de l'enfoncement 40 comprend des barrettes d'espacement 49 s'étendant en direction du voile de transmission de couple depuis le fond arrondi et qui s'intercalent entre le voile de transmission de couple 2 et les deux éléments de guidage 3.

Dans ce deuxième mode de mise en œuvre, le dispositif d'amortissement vibratoire 1 reprend la même architecture que celle décrite dans le premier mode et le fonctionnement général est également similaire.

Dans une variante de réalisation de l'invention, le siège 10 de ressort peut être obtenu par usinage, forgeage, matriçage, par moulage d'un métal ou d'une matière synthétique, par la technologie des poudres compressées ou encore par la technologie de fabrication par addition de matière.

L'invention n'est pas limitée aux deux exemples de mise en œuvre de l'invention qui viennent d'être décrit. Selon un autre aspect de l'invention, le disposition d'amortissement vibratoire peut se présenter sous la forme d'un double volant amortisseur.

Dans cet autre exemple de mise en œuvre de l'invention, le double volant amortisseur comporte un premier volant, autrement appelé volant primaire, servant d'élément d'entrée de couple au dispositif d'amortissement vibratoire, ainsi qu'un deuxième volant, autrement appelé volant secondaire, servant d'élément de sortie de couple du dispositif d'amortissement vibratoire. Les deux volants primaire et secondaire sont montés coaxiaux l'un par rapport à l'autre autour d'un axe de rotation X du double volant amortisseur.

Dans ce dispositif d'amortissement vibratoire, la première masse d'inertie est fixée sur l'un des éléments de guidage et la deuxième masse d'inertie est fixée sur le voile de transmission de couple. Par exemple, les deux volants primaire et secondaire sont montés rotatifs l'un par rapport à l'autre à l'encontre de de ressorts hélicoïdaux de compression ainsi que des moyens d'interfaçage 10 avec les deux volants. Plus précisément, les moyens d'interfaçage comprennent des sièges de ressorts placés aux extrémités des ressorts, d'une part, et, d'autre part, des éléments de guidage encadrant un voile secondaire. Dans cet autre exemple de mise en œuvre de l'invention, le siège reprend l'ensemble des caractéristiques présentées dans le premier mode de mise en œuvre de l'invention.

Le dispositif d'amortissement vibratoire 1 peut également être intégré à une transmission de véhicule automobile dites « Hybride » comprenant un moteur thermique et un moteur électrique. Dans cette transmission « hybride », l'entrée de couple du dispositif d'amortissement vibratoire 1 se fait en aval du moteur thermique et la sortie de couple du dispositif d'amortissement vibratoire 1 est solidaire en rotation de manière directe ou indirecte avec le rotor du moteur électrique.

## Revendications

1. Dispositif d'amortissement vibratoire (1) pour véhicule automobile, comprenant :
- un voile de transmission de couple (2) ;
- deux éléments de guidage (3) liés en rotation, coaxiaux suivant un axe de rotation (X) et disposés de part et d'autre dudit voile de transmission de couple (2) ;
- des ressorts hélicoïdaux de compression (4) en appui sur le voile de transmission de couple et les éléments de guidage par l'intermédiaire de sièges (10) disposés sur les extrémités des ressorts,
dans lequel chaque siège (10) comprend :
- une face frontale (12) apte à coopérer avec l'extrémité des ressorts comprenant un rebord de centrage (14) dont l'axe de centrage est confondu avec l'axe des ressorts (Y),
- une face dorsale (11) définissant un plan géométrique (P) adossé à la partie frontale, et
- un enfoncement (40, 40a) s'étendant selon l'axe des ressorts (Y) en creux depuis la face dorsale,
**caractérisé en ce que** chaque siège est en appui sur des protubérances (30) formées respectivement sur le voile de transmission de couple (2) et les deux éléments de guidage (3) de manière à coopérer selon une liaison pivot, et les protubérances (30) pénètrent dans l'enfoncement (40, 40a) qui est commun au voile de transmission de couple (2) et aux deux éléments de guidage (3).

2. Dispositif d'amortissement vibratoire (1) selon la revendication 1, **caractérisé en ce que** l'enfoncement (40, 40a) est de forme concave et comprend un fond arrondi (41) défini par un rayon de pivotement (R), la protubérance (30) du voile de transmission de couple (2) et/ou les protubérances (30) des deux éléments de guidage (3) viennent en appui sur le rayon de pivotement (R) du fond arrondi.

3. Dispositif d'amortissement vibratoire (1) selon la revendication précédente, **caractérisé en ce que** l'enfoncement (40, 40a) comprend deux surfaces d'appui (45) agencées pour venir en appui sur la protubérance du voile de transmission de couple (2) et des deux éléments de guidage (3) lors de la compression des ressorts, chaque surface d'appui est tangente au rayon de pivotement (R) du fond arrondi.

4. Dispositif d'amortissement vibratoire (1) selon la revendication précédente, **caractérisé en ce que** l'enfoncement (40, 40a) présente, en section dans le plan médian (P') passant par l'axe des ressorts (Y), une forme prismatique comportant les deux surfaces d'appui (45) sensiblement planes s'éloignant l'un de l'autre en direction de la face dorsale, la forme prismatique ayant un angle (α) compris entre 30° et 70°.

5. Dispositif d'amortissement vibratoire (1) selon la revendication précédente, **caractérisé en ce que** les surfaces d'appui (45) sont courbes, par exemple avec une développante de cercle ou polynomiale.

6. Dispositif d'amortissement vibratoire (1) selon l'une des revendications précédentes, **caractérisé en ce que** le voile de transmission de couple (2) et les deux éléments de guidage (3) comprennent chacun au moins une fenêtre (20) pour le logement des ressorts (4) et de deux sièges (10), chaque fenêtre comprend deux protubérances (30) disposées en regard l'une de l'autre.

7. Dispositif d'amortissement vibratoire (1) selon la revendication précédente, **caractérisé en ce que** chaque fenêtre (20) comprend un bandeau radialement externe (21), deux surfaces radiales de support (22) supportant les protubérances (30) de formes convexes et un bord radialement interne (24) de sorte à former un logement fermé apte à recevoir les ressorts et les sièges.

8. Dispositif d'amortissement vibratoire (1) selon la revendication précédente, **caractérisé en ce que** chaque protubérance (30) comporte une surface d'extrémité arrondie (31) et deux cotés (32, 33) sensiblement plans, les cotés (32, 33) sensiblement plans sont les cotés d'une forme prismatique ayant un angle (β) aigu compris entre 20° et 60°, qui s'éloignent l'un de l'autre en direction de la surface radiale de support (22).

9. Dispositif d'amortissement vibratoire (1) selon la revendication précédente, **caractérisé en ce que** l'angle (α) de l'enfoncement (40, 40a) est supérieur à l'angle (β) de la protubérance (30).

10. Dispositif d'amortissement vibratoire (1) selon l'une des revendications 7 à 9, **caractérisé en ce que** la surface d'appui latéral (22) présente un premier bord (221) et un deuxième bord (222) aptes à venir en contact de butée avec la face dorsale (11) du siège lors d'une mise en œuvre de la liaison pivot, les deux bords (221, 222) n'étant pas parallèles l'un par rapport à l'autre.

11. Dispositif d'amortissement vibratoire (1) selon l'une des revendications précédentes, **caractérisé en ce que** l'enfoncement est une cavité centrale (40a) qui comprend deux rebords latéraux (42) venant respectivement en appui sur les flancs externes (3a) des deux éléments de guidage (3).

12. Dispositif d'amortissement vibratoire (1) selon la revendication précédente, **caractérisé en ce que** la cavité centrale (40a) pénètre au-delà de la face frontale (12) du siège dans la direction de l'axe des ressorts (Y).

13. Dispositif d'amortissement vibratoire (1) selon l'une revendications 2 à 5, **caractérisé en ce que** l'enfoncement est une rainure (40) ayant une forme allongée qui débouche sur les bords du siège (10) et le fond arrondi (41) de l'enfoncement comprend des barrettes d'espacement (49) s'étendant en direction du voile de transmission de couple (2) depuis le fond arrondi et qui s'intercalent entre le voile de transmission de couple (2) et les deux éléments de guidage (3).

14. Double volant amortisseur comprenant une première masse d'inertie et une deuxième masse d'inertie coaxiales selon un axe (X), un dispositif d'amortissement vibratoire (1) selon l'une des revendications précédentes, **caractérisé en ce que** la première masse d'inertie est portée par les éléments de guidage (3) et la deuxième masse d'inertie est portée par le voile de transmission de couple (2).

15. Disque d'embrayage à friction comprenant un disque de friction (6) équipé de garnitures de frottement (7) et un dispositif d'amortissement vibratoire (1) selon l'une des revendications 1 à 13, **caractérisé en ce que** le disque de friction (6) est rapporté sur l'un des éléments de guidage (3) ou sur le voile de transmission de couple (2).

## Patentansprüche

1. Schwingungsdämpfungsvorrichtung (1) für ein Kraftfahrzeug, umfassend:
- eine Drehmomentübertragungsscheibe (2);
- zwei drehfest miteinander verbundene Führungselemente (3), die koaxial zu einer Drehachse (X) angeordnet sind und sich zu beiden Seiten der Drehmomentübertragungsscheibe (2) befinden;
- Schraubendruckfedern (4), die über an den Enden der Federn angeordnete Sitze (10) auf der Drehmomentübertragungsscheibe und den Führungselementen aufliegen,
wobei jeder Sitz (10) umfasst:
- eine Stirnfläche (12), die mit dem Ende der Federn zusammenwirken kann und einen Zentrierrand (14) aufweist, dessen Zentrierachse mit der Achse der Federn (Y) zusammenfällt,
- eine Rückseite (11), die eine an die Vorderseite angrenzende geometrische Ebene (P) definiert, und
- eine Vertiefung (40, 40a), die sich entlang der Achse der Federn (Y) von der Rückseite aus nach innen erstreckt,
**dadurch gekennzeichnet, dass** jeder Sitz auf Vorsprüngen (30) aufliegt, die jeweils an der Drehmomentübertragungsplatte (2) und den beiden Führungselementen (3) ausgebildet sind, um in einer Schwenkverbindung zusammenzuwirken, und
die Vorsprünge (30) in die Vertiefung (40, 40a) eindringen, die der Drehmomentübertragungsscheibe (2) und den beiden Führungselementen (3) gemeinsam ist.

2. Schwingungsdämpfungsvorrichtung (1) nach Anspruch 1, **dadurch gekennzeichnet, dass** die Vertiefung (40, 40a) konkav geformt ist und einen abgerundeten Boden (41) aufweist, der durch einen Schwenkradius (R) definiert ist, wobei der Vorsprung (30) der Drehmomentübertragungsscheibe (2) und/oder die Vorsprünge (30) der beiden Führungselemente (3) auf dem Schwenkradius (R) des abgerundeten Bodens aufliegen.

3. Schwingungsdämpfungsvorrichtung (1) nach dem vorstehenden Anspruch, **dadurch gekennzeichnet, dass** die Vertiefung (40, 40a) zwei Auflageflächen (45) aufweist, die so angeordnet sind, dass sie beim Zusammendrücken der Federn auf dem n Vorsprung der Drehmomentübertragungsscheibe (2) und der beiden Führungselemente (3) aufliegen, jede Auflagefläche tangential zum Schwenkradius (R) des abgerundeten Bodens verläuft.

4. Schwingungsdämpfungsvorrichtung (1) nach dem vorstehenden Anspruch, **dadurch gekennzeichnet, dass** die Vertiefung (40, 40a) im Schnitt in der Mittelebene (P'), die durch die Federachse (Y) verläuft, eine prismatische Form mit den beiden im Wesentlichen ebenen Auflageflächen (45) aufweist, die sich in Richtung der Rückseite voneinander entfernen, wobei die prismatische Form einen Winkel (α) zwischen 30° und 70° aufweist.

5. Schwingungsdämpfungsvorrichtung (1) nach dem vorstehenden Anspruch, **dadurch gekennzeichnet, dass** die Auflageflächen (45) gekrümmt sind, beispielsweise mit einer Kreisentwicklungslinie oder einer Polynomkurve.

6. Schwingungsdämpfungsvorrichtung (1) nach einem der vorstehenden Ansprüche, **dadurch gekennzeichnet, dass** die Drehmomentübertragungsplatte (2) und die beiden Führungselemente (3) jeweils mindestens ein Fenster (20) zur Aufnahme der Federn (4) und zwei Sitze (10) aufweisen, wobei jedes Fenster zwei einander gegenüberliegende Vorsprünge (30) aufweist.

7. Schwingungsdämpfungsvorrichtung (1) nach dem vorstehenden Anspruch, **dadurch gekennzeichnet, dass** jedes Fenster (20) einen radial äußeren Rand (21), zwei radiale Auflageflächen (22), die die konvex geformten Vorsprünge (30) stützen, und einen radial inneren Rand (24) aufweist, so dass ein geschlossener Aufnahmeraum gebildet wird, der zur Aufnahme der Federn und der Sitze geeignet ist.

8. Schwingungsdämpfungsvorrichtung (1) nach dem vorstehenden Anspruch, **dadurch gekennzeichnet, dass** jeder Vorsprung (30) eine abgerundete Endfläche (31) und zwei im Wesentlichen ebene Seiten (32, 33) aufweist, wobei die im Wesentlichen ebenen Seiten (32, 33) die Seiten eines prismatischen Körpers mit einem spitzen Winkel (β) zwischen 20° und 60° sind, die sich in Richtung der radialen Auflagefläche (22) voneinander entfernen.

9. Schwingungsdämpfungsvorrichtung (1) nach dem vorstehenden Anspruch, **dadurch gekennzeichnet, dass** der Winkel (α) der Vertiefung (40, 40a) größer ist als der Winkel (β) des Vorsprungs (30).

10. Schwingungsdämpfungsvorrichtung (1) nach einem der Ansprüche 7 bis 9, **dadurch gekennzeichnet, dass** die seitliche Auflagefläche (22) einen ersten Rand (221) und einen zweiten Rand (222) aufweist, die bei einer Betätigung der Schwenkverbindung in Anlage mit der Rückseite (11) des Sitzes kommen können, wobei die beiden Kanten (221, 222) nicht parallel zueinander verlaufen.

11. Schwingungsdämpfungsvorrichtung (1) nach einem der vorstehenden Ansprüche, **dadurch gekennzeichnet, dass** die Vertiefung ein zentraler Hohlraum (40a) ist, der zwei seitliche Ränder (42) aufweist, die jeweils an den Außenflanken (3a) der beiden Führungselemente (3) anliegen.

12. Schwingungsdämpfungsvorrichtung (1) nach dem vorstehenden Anspruch, **dadurch gekennzeichnet, dass** die zentrale Vertiefung (40a) über die Stirnseite (12) des Sitzes hinaus in Richtung der Federachse (Y) reicht.

13. Schwingungsdämpfungsvorrichtung (1) nach einem der Ansprüche 2 bis 5, **dadurch gekennzeichnet, dass** die Vertiefung eine langgestreckte Nut (40) ist, die an den Rändern des Sitzes (10) und am abgerundeten Boden (41) der Vertiefung Abstandshalter (49) aufweist, die sich vom abgerundeten Boden aus in Richtung der Drehmomentübertragungsscheibe (2) erstrecken und sich zwischen die Drehmomentübertragungsscheibe (2) und die beiden Führungselemente (3) schieben.

14. Doppeltes Schwungrad mit einer ersten Trägheitsmasse und einer zweiten Trägheitsmasse, die koaxial zu einer Achse (X) angeordnet sind, eine Schwingungsdämpfungsvorrichtung (1) gemäß einem der vorstehenden Ansprüche, **dadurch gekennzeichnet, dass** die erste Trägheitsmasse von den Führungselementen (3) getragen wird und die zweite Trägheitsmasse von der Drehmomentübertragungsscheibe (2) getragen wird.

15. Reibungskupplungsscheibe, umfassend eine mit Reibbelägen (7) ausgestattete Reibscheibe (6) und eine Schwingungsdämpfungsvorrichtung (1) gemäß einem der Ansprüche 1 bis 13, **dadurch gekennzeichnet, dass** die Reibscheibe (6) an einem der Führungselemente (3) oder an der Drehmomentübertragungsscheibe (2) angebracht ist.

## Claims

1. A vibration damping device (1) for an automotive vehicle, comprising:
- a torque transmission plate (2);
- two rotatably connected guide elements (3) that are coaxial along an axis of rotation (X) and positioned on either side of said torque transmission plate (2);
- helical compression springs (4) bearing on the torque transmission plate and the guide elements by means of seats (10) positioned on the ends of the springs,
wherein each seat (10) comprises:
- a frontal face (12) suitable for interacting with the end of the springs, comprising a centring flange (14), the centring axis of which is coincident with the axis (Y) of the springs,
- a dorsal face (11) defining a geometric plane (P) backing onto the frontal part, and
- an indentation (40, 40a) extending along the axis (Y) of the springs inwards from the dorsal face,
**characterized in that** each seat bears on protuberances (30) formed respectively on the torque transmission plate (2) and the two guide elements (3) so as to interact about a pivot connection, and
the protuberances (30) enter the indentation (40, 40a), which is common to the torque transmission plate (2) and the two guide elements (3).

2. Vibration damping device (1) according to Claim 1,
**characterized in that** the indentation (40, 40a) is concave and comprises a rounded bottom (41) defined by a pivoting radius (R), the protuberance (30) of the torque transmission plate (2) and/or the protuberances (30) of the two guide elements (3) bearing on the pivoting radius (R) of the rounded bottom.

3. Vibration damping device (1) according to the preceding claim,
**characterized in that** the indentation (40, 40a) comprises two bearing surfaces (45) arranged to bear on the protuberances of the torque transmission plate (2) and the two guide elements (3) when the springs are compressed, each bearing surface being tangent to the pivoting radius (R) of the rounded bottom.

4. Vibration damping device (1) according to the preceding claim,
**characterized in that** the indentation (40, 40a) has, in cross-section in the mid-plane (P') passing along the axis (Y) of the springs, a prismatic shape comprising the two substantially planar bearing surfaces (45) moving away from each other in the direction of the dorsal face, the prismatic shape having an angle (α) of between 30° and 70°.

5. Vibration damping device (1) according to the preceding claim,
**characterized in that** the bearing surfaces (45) are curved, for example with an involute or polynomial.

6. Vibration damping device (1) according to one of the preceding claims, **characterized in that** the torque transmission plate (2) and the two guide elements (3) each comprise at least one window (20) for receiving the springs (4) and two seats (10), each window comprising two protuberances (30) positioned facing each other.

7. Vibration damping device (1) according to the preceding claim,
**characterized in that** each window (20) comprises a radially outer band (21), two radial support surfaces (22) supporting the convex protuberances (30), and a radially inner edge (24), so as to form a closed recess suitable for receiving the springs and seats.

8. Vibration damping device (1) according to the preceding claim,
**characterized in that** each protuberance (30) comprises a rounded end surface (31) and two substantially planar sides (32, 33), the substantially planar sides (32, 33) being the sides of a prismatic shape having an acute angle (β) of between 20° and 60°, which move away from each other in the direction of the radial support surface (22).

9. Vibration damping device (1) according to the preceding claim,
**characterized in that** the angle (α) of the indentation (40, 40a) is greater than the angle (β) of the protuberance (30).

10. Vibration damping device (1) according to one of Claims 7 to 9, **characterized in that** the lateral bearing surface (22) has a first edge (221) and a second edge (222) suitable for coming into abutting contact with the dorsal face (11) of the seat when the pivot connection is implemented, the two edges (221, 222) not being parallel to each other.

11. Vibration damping device (1) according to one of the preceding claims, **characterized in that** the indentation is a central cavity (40a) that comprises two lateral flanges (42) respectively bearing on the outer walls (3a) of the two guide elements (3).

12. Vibration damping device (1) according to the preceding claim,
**characterized in that** the central cavity (40a) penetrates beyond the frontal face (12) of the seat in the direction of the axis (Y) of the springs.

13. Vibration damping device (1) according to one of Claims 2 to 5, **characterized in that** the indentation is a groove (40) having an elongate shape that emerges on the edges of the seat (10) and the rounded bottom (41) of the indentation comprises spacer lugs (49) that extend in the direction of the torque transmission plate (2) from the rounded bottom and are interposed between the torque transmission plate (2) and the two guide elements (3).

14. Dual-mass flywheel comprising a first inertial mass and a second inertial mass that are coaxial along an axis (X), and a vibration damping device (1) according to one of the preceding claims, **characterized in that** the first inertial mass is held by the guide elements (3) and the second inertial mass is held by the torque transmission plate (2).

15. Friction clutch disc comprising a friction disc (6) provided with friction linings (7) and a vibration damping device (1) according to one of Claims 1 to 13, **characterized in that** the friction disc (6) is attached to one of the guide elements (3) or to the torque transmission plate (2).
